(19) Europäisches Patentamt
European Patent Office
Office européen des brevets

(11) EP 4 372 040 A1

(12) **EUROPEAN PATENT APPLICATION**
published in accordance with Art. 153(4) EPC

(43) Date of publication:
**22.05.2024 Bulletin 2024/21**

(21) Application number: **23775221.7**

(22) Date of filing: **15.03.2023**

(51) International Patent Classification (IPC):
***C08K 5/00*** (2006.01) ***C08K 5/3432*** (2006.01)
***C08K 5/11*** (2006.01) ***C08L 67/04*** (2006.01)

(52) Cooperative Patent Classification (CPC):
**C08K 5/00; C08K 5/11; C08K 5/3432; C08L 67/04**

(86) International application number:
**PCT/KR2023/003453**

(87) International publication number:
**WO 2023/182723 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2022 KR 20220035551**

(71) Applicant: **LG Chem, Ltd.**
**Yeongdeungpo-gu**
**Seoul 07336 (KR)**

(72) Inventors:
- **CHOE, Yeonji**
**Daejeon 34122 (KR)**
- **LEE, Jeongkyu**
**Daejeon 34122 (KR)**
- **CHO, Jeong Hun**
**Daejeon 34122 (KR)**
- **AN, Yujin**
**Daejeon 34122 (KR)**
- **OH, Sung Joon**
**Daejeon 34122 (KR)**
- **OH, Wan Kyu**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **POLYLACTIDE RESIN COMPOSITION AND PREPARATION METHOD THEREFOR**

(57) The present disclosure relates to a polylactide resin composition used in combination with a specific nucleating agent, which can relatively increase only the mobility of high molecular weight of the polylactide resin to improve the crystallinity degree, and at the same time, makes an amorphous region of the polylactide resin have a low glass transition temperature, thereby lowering the glass transition temperature of the polylactide resin composition, and simultaneously improving the crystallinity degree thereof.

[FIG. 1]

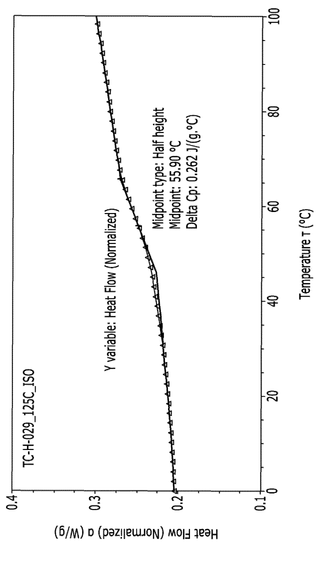


EP 4 372 040 A1

## Description

### [TECHNICAL FIELD]

CROSS-REFERENCE TO RELATED APPLICATION(S)

This application claims the benefit of Korean Patent Application No. 10-2022-0035551 filed on March 22, 2022 with the Korean Intellectual Property Office, the disclosure of which is incorporated herein by reference in its entirety.

The present invention relates to a polylactide resin composition having a low glass transition temperature and an excellent crystallinity degree, and a method for preparing the same.

### [BACKGROUND ART]

Polylactide (or polylactic acid; PLA) resin is prepared based on biomass materials, and is an eco-friendly material which emits less global warming gas carbon dioxide during the production process, and is degraded by a specific temperature and composting facility. In recent years, it has also attracted attention as one of the materials that can replace existing crude oil-based resins as a measure for the upcycling of waste plastics and regulation on carbon emissions.

In addition, the polylactide resin has the advantages of being inexpensive compared to other biodegradable polymers and having high tensile strength and modulus properties.

However, the polylactide resin has a problem that a rigid polymer main chain is repeated in short units, the crystallization rate is slow due to slow chain mobility, and the molding cycle is long, thereby lowering the productivity. Therefore, in order to improve these problems, many studies are being conducted to introduce a material such as a nucleating agent to improve productivity and heat resistance. In addition, the polylactide resin has brittle properties, and in order to improve this, the $T_g$ (glass transition temperature) of the polylactide resin should be lowered.

Therefore, a method for increasing the crystallinity degree of the polylactide resin and simultaneously lowering the glass transition temperature is required, but general nucleating agents increase the entire chain mobility of the polylactide resin, and thus, there is a limit to improving the above two properties at the same time.

Thus, in order to improve the above properties at the same time, the present inventors have found a method of improving the crystallinity degree by relatively increasing only the mobility of high molecular weight of the polylactide resin as described later, and at the same time, making an amorphous region of the polylactide resin have a low glass transition temperature, and completed the present disclosure.

### [DETAILED DESCRIPTION OF THE INVENTION]

### [Technical Problem]

It is an object of the present disclosure to provide a polylactide resin composition having a low glass transition temperature and an excellent crystallinity degree, and a method for preparing the same.

### [Technical Solution]

In order to achieve the above object, according to the present disclosure, there is provided the following polylactide resin composition:

A polylactide resin composition comprising:

a polylactide resin; a first nucleating agent; and a second nucleating agent,

wherein the polylactide resin composition has a glass transition temperature ($T_{g,T}$) and a crystallinity degree of 60°C or less and 55% or more, respectively, which are measured by setting a crystallization temperature to a specific temperature (T) of 100 to 130°C, and

wherein $\Delta T_g$ in the following Equation 1 is 5 or more:

[Equation 1]

$$\Delta T_g = \left| \frac{(T_{g,T} - T_{g,90})}{T_{g,90}} \times 100 \right|$$

in Equation 1,

$T_{g,T}$ is the glass transition temperature (°C) measured by setting the crystallization temperature to the specific temperature (T) for the polylactide resin composition, and

$T_{g,90}$ is the glass transition temperature (°C) measured by setting the crystallization temperature to 90°C for the polylactide resin composition.

As used herein, the term "polylactide resin" is defined as comprehensively referring to a homopolymer or copolymer including a repeating unit represented by the following Chemical Formula.

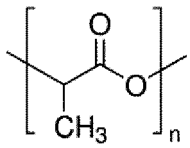

The polylactide resin can be prepared by a process including a step of forming the above repeating unit by the ring opening polymerization of the lactide monomer. The polymer obtained after the completion of such ring opening polymerization and the formation of the repeating unit can be referred to as the "polylactide resin".

At this time, the term "lactide monomer" can be defined as follows. Typically, lactides can be classified into L-lactide consisting of L-lactic acid, D-lactide consisting of D-lactic acid, and meso-lactide consisting of an L-type and a D-type. Also, a mixture of L-lactide and D-lactide in a ratio of 50:50 is referred to as D,L-lactide or rac-lactide. Among these lactides, the polymerization proceeding only with either of L-lactide and D-lactide that have a high level of optical purity is known to yield an L- or D-polylactide (PLLA or PDLA) with a high level of stereoregularity. Such polylactides have a faster crystallization rate and also a higher crystallinity degree than a polylactide having a low level of optical purity. However, the term "lactide monomer" as used herein is defined to include all types of lactides regardless of the characteristic differences of lactides depending on their shapes and the characteristic differences of the polylactide resins obtained therefrom.

Meanwhile, the polylactide resin composition according to the present disclosure has a weight average molecular weight of 70,000 to 400,000 as an example.

The present disclosure is characterized in that the polylactide resin is used in combination of the first nucleating agent and the second nucleating agent to thereby lower the glass transition temperature of the polylactide resin and improve the crystallinity degree thereof.

The first nucleating agent is uracil or orotic acid. The first nucleating agent is a bio-based organic material, and is added to the polylactide resin, acts as a nucleation site and induces the crystal nucleus generation at high temperature, thereby capable of improving the crystallinity degree.

Preferably, the first nucleating agent is contained in an amount of 0.1 to 5% by weight based on the total weight of the polylactide resin composition. If the content is less than 0.1% by weight, the effect due to the use of the first nucleating agent is insignificant, and if the content exceeds 5% by weight, there is a risk of impairing physical properties inherent in the polylactide resin. More preferably, the first nucleating agent is contained in an amount of 0.2% by weight or more, 0.3% by weight or more, 0.4% by weight or more, or 0.5% by weight or more; and 4.5% by weight or less, 4.0% by weight or less, or 3.5% by weight or less.

The second nucleating agent is a nucleating agent containing an oligomer structure of the lactide monomer. Due to the oligomer structure of the lactide monomer, it has high compatibility with the polylactide resin, and is added to the polylactide resin to play a role similar to that of a plasticizer. Thereby, a free volume can be formed in the polylactide resin to thereby enhance the chain mobility of the polylactide resin and increase the crystallinity degree. In addition, since the mobility of the high molecular weight of the polylactide resin is relatively increased, it is possible to increase the crystallinity degree of the polylactide resin and at the same time, make an amorphous region of the polylactide resin have a low glass transition temperature, thereby lowering the glass transition temperature.

Preferably, the second nucleating agent is a compound represented by the following Chemical Formula 1:

[Chemical Formula 1]

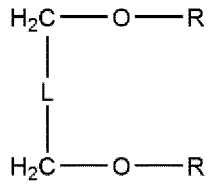

in Chemical Formula 1,
L is any one selected from the group consisting of:

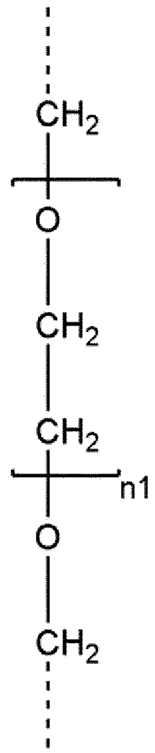

wherein,

n1 is an integer of 1 to 30, and
R is a substituent represented by the following Chemical Formula 2,

[Chemical Formula 2]

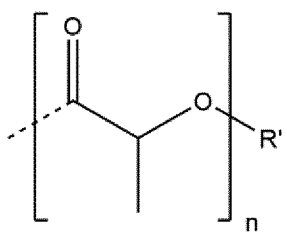

wherein,

n represents the number of repeating units, and
R' is hydrogen or acetyl.

The weight average molecular weight of the second nucleating agent may be adjusted according to the number of each lactide repeating unit. Preferably, the weight average molecular weight of the second nucleating agent is 1,000 to 50,000. More preferably, the weight average molecular weight of the second nucleating agent is 1,100 or more, 1,200 or more, 1,300 or more, 1,400 or more, or 1,500 or more; and 40,000 or less, 30,000 or less, 20,000 or less, 10,000 or less, 9,000 or less, or 8,000 or less.

Preferably, the second nucleating agent is contained in an amount of 3 to 25% by weight based on the total weight of the polylactide resin composition. If the content is less than 3% by weight, the effect due to the use of the second nucleating agent is insignificant, and if the content exceeds 25% by weight, there is a risk of impairing the physical properties inherent in the polylactide resin. More preferably, the second nucleating agent is contained in an amount of 3.5% by weight or more, 4.0% by weight or more, or 4.5% by weight or more; and 24% by weight or less, 23% by weight or less, 22% or less, or 21% by weight or less.

In particular, the polylactide resin composition is characterized by having a glass transition temperature ($T_{g,T}$) and a crystallinity degree of 60°C or less and 55% or more, respectively, which are measured by setting a crystallization temperature to a specific temperature (T) of 100 to 130°C.

The term 'crystallization temperature' as used herein refers to the temperature when the polylactide resin composition is melted to a given temperature and then cooled to measure a glass transition temperature. Specifically, when the polylactide resin composition is melted at 200°C and then cooled to 120°C at a cooling rate of 40°C/min, the 120°C is referred to as the 'crystallization temperature'. Then, after maintaining an isothermal state at the above crystallization temperature for 60 minutes, it is cooled to -50°C at a cooling rate of 40°C/min, and the temperature is raised to 200°C at an isothermal rate of 10 °C/min to measure the 2nd heating thermogram, and the half-height type in the 2nd heating thermogram is defined as the glass transition temperature ($T_{g,T}$). Specifically, FIG. 1 is a 2nd heating thermogram of Example 5 described later. As shown in FIG. 1, since the $C_p$ (heat capacity) of polylactide changes during the glass transition process, the baseline is shifted and observed. At this time, the temperature at half-height of the two baselines is defined as the glass transition temperature. In addition, the crystallinity degree (%) is also calculated from the endothermic peak area in the 2nd heating thermogram. Specific methods for measuring the glass transition temperature and crystallinity degree can be embodied in Examples provided hereinafter.

Preferably, the polylactide resin composition has a glass transition temperature ($T_{g,T}$) of 56°C or less, as measured by setting the crystallization temperature to a specific temperature (T) of 120 to 130°C. That is, the polylactide resin composition according to the present disclosure is affected by the crystallization temperature, and has a characteristic that when the crystallization temperature is set to 120 to 130°C, the glass transition temperature ($T_{g,T}$) is further lowered. More preferably, the polylactide resin composition has a glass transition temperature ($T_{g,T}$) of 50°C or less, as measured by setting the crystallization temperature to a specific temperature (T) of 120 to 130°C. Meanwhile, the lower limit of the glass transition temperature ($T_{g,T}$) is, for example, 40°C or more, 41°C or more, 42°C or more, 43°C or more, 44°C or more, or 45°C or more.

In addition, the polylactide resin composition has $\Delta T_g$ of 5 or more in Equation 1. Equation 1 means the extent to which the glass transition temperature of the polylactide resin composition according to the present disclosure measured by setting the crystallization temperature to the specific temperature (T) is lowered as compared to the glass transition temperature measured by setting the crystallization temperature to 90°C, which means that as the value is higher, the glass transition temperature is lower. Preferably, $\Delta T_g$ in Equation 1 is 5.5 or more, 6.0 or more, or 6.5 or more. Further, preferably, $\Delta T_g$ in Equation 1 is 15 or less, 14 or less, 13 or less, 12 or less, or 11 or less.

Meanwhile, the method for preparing the above-mentioned polylactide resin composition according to the present disclosure is not particularly limited as long as it is a method of mixing the polylactide resin, the first nucleating agent, and the second nucleating agent. In one example, the respective components can be prepared by a melt blending method.

**[Advantageous Effects]**

The above-mentioned polylactide resin composition according to the present disclosure has a low glass transition temperature and an excellent crystallinity degree, and thus can improve the processability of the polylactide resin composition.

**[BRIEF DESCRIPTION OF THE DRAWINGS]**

FIG. 1 shows a method for measuring the glass transition temperature in the present disclosure.

**[DETAILED DESCRIPTION OF THE EMBODIMENTS]**

Below, embodiments of the present disclosure will be described in more detail with reference to examples.

However, the following examples are for illustrative purposes only and are not intended to limit the scope of the present disclosure.

**Preparation Example 1: Preparation of Second Nucleating Agent (P10-A-002)**

An oligomer was prepared using PEG-1000 (P10) as an initiator. Specifically, lactide and P10 were added in a 20 mL vial at a molar ratio of 8:1 so that the total was 4.5 g, and $Sn(Oct)_2$ catalyst was added in amount to be 0.1 to 0.2 wt.%, and then reacted at 130°C for 4 hours. After adjusting the temperature to 120°C, acetic anhydride (4 equivalents relative to the terminal OH group) was added, and further reacted for 12 hours. After completion of the reaction, byproduct acetic acid and residual acetic anhydride were removed by vacuum drying to prepare a second nucleating agent having a structure in which the terminal group was substituted with an acetyl group, which was named P10-A-002, and the weight average molecular weights are shown in Table 1 below.

**Example and Comparative Example**

65 g of PLA pellet (4032D from NatureWorks; weight average molecular weight of about 200,000) and the first nucleating agent shown in Table 1 below was mixed according to the respective amounts. The mixture was placed in a Haake mixer, and mixed at 180°C for 5 minutes at 60 rpm. The second nucleating agent shown in Table 1 below was added thereto according to the respective amounts, and mixed at 180°C for 5 minutes at 60 rpm. At this time, in Table 1 below, the amount of the first nucleating agent and the second nucleating agent means wt.% relative to the total amount of the PLA resin, the first nucleating agent and the second nucleating agent.

**Experimental Example**

The physical properties of the polylactide resin composition prepared above were measured by the following methods.

**1) Weight average molecular weight**

For the previously prepared second nucleating agent, the number average molecular weight (Mn) and the weight average molecular weight (Mw) were calculated using a GPC (Gel Permeation Chromatography) device, and the oligomer molecular weight distribution (Mw/Mn) was measured, and specific measurement conditions are as follows.

- Column: PLgel Mixed E x 2
- Solvent: THF
- Flow rate: 0.7 mL/min
- Sample concentration: 3.0 mg/mL
- Injection volume: 100 μl
- Column temperature: 40°C
- Detector: Waters 2414 RID
- Standard: PS (Polystyrene)

**2) DSC (Differential scanning calorimetry)**

Each of the polylactide resin compositions prepared in Examples and Comparative Examples was completely melted at 200°C for 20 minutes in order to eliminate the thermal history. Then, it was cooled at a cooling rate of 40 °C/min to the crystallization temperature shown in Table 1 below. After maintaining an isothermal state at the above crystallization temperature for 60 minutes, it was cooled to -50 °C at a cooling rate of 40 °C/min. Again, the temperature was raised to 200 °C at a heating rate of 10 °C/min, and a 2nd heating thermogram was observed. At this time, $T_{g,T}$ was defined as a half-height type, and the crystallinity degree (%) was calculated using the following Equation (100% crystalline PLA ΔHm = 93 J/g). w refers to the nucleating agent content (for example, in the case of 5 wt.%, w is 0.05).

-

Crystallinity degree : ((Endothermic peak area in 2nd thermogram, ΔHm-cold crystallization exothermic peak area, ΔHcc) / (1-w) * (100% crystalline PLA ΔHm)) * 100

Further, the same process as above was performed, but the crystallization temperature was set to 90°C, and $T_{g,90}$ was measured, and then $\Delta T_g$ of Equation 1 was calculated.

[Equation 1]

$$\Delta T_g = \left| \frac{(T_{g,T} - T_{g,90})}{T_{g,90}} \times 100 \right|$$

in Equation 1,

$T_{g,T}$ is the glass transition temperature (°C) measured by setting the crystallization temperature to a specific temperature (T) for the polylactide resin composition, and
$T_{g,90}$ is the glass transition temperature (°C) measured by setting the crystallization temperature to 90 °C for the polylactide resin composition.

The results are shown in Table 1 below.

[Table 1]

| | First nucleating agent | First nucleating agent content (wt.%) | Second nucleating agent content (Mw: 6000) (wt.%) | Crystallizati on temperatur e (T) (°C) | $T_{g,T}$ (°C) | Crystalli nity degree (%) | $\Delta T_g$ |
|---|---|---|---|---|---|---|---|
| Example 1 | orotic acid | 3 | 5 | 120 | 55 | 55 | 5.7 |
| Example 2 | orotic acid | 3 | 5 | 130 | 54 | 58 | 6.7 |
| Example 3 | orotic acid | 3 | 10 | 120 | 48 | 57 | 6.5 |
| Example 4 | orotic acid | 3 | 10 | 130 | 47 | 62 | 7.2 |
| Example 5 | uracil | 3 | 5 | 125 | 56 | 56 | 6.8 |
| Example 6 | uracil | 3 | 10 | 125 | 49 | 59 | 11.4 |
| Example 7 | uracil | 1 | 10 | 120 | 50 | 57 | 7.1 |
| Example 8 | uracil | 1 | 10 | 125 | 50 | 58 | 6.4 |
| Example 9 | uracil | 1 | 10 | 130 | 48 | 63 | 10.3 |
| Comparative Example 1 | orotic acid | 1 | 0 | 120 | 63 | 52 | 3.8 |
| Comparative Example 2 | orotic acid | 1 | 0 | 130 | 63 | 57 | 5.0 |
| Comparative Example 3 | orotic acid | 3 | 0 | 130 | 62 | 55 | 4.3 |
| Comparative Example 4 | orotic acid | 3 | 0 | 120 | 63 | 52 | 2.8 |
| Comparative Example 5 | orotic acid | 3 | 0 | 110 | 63 | 47 | 1.7 |
| Comparative Example 6 | uracil | 1 | 0 | 120 | 64 | 50 | 1.4 |
| Comparative Example 7 | uracil | 1 | 0 | 130 | 63 | 55 | 3.1 |
| Comparative Example 8 | uracil | 3 | 0 | 120 | 63 | 50 | 2.9 |

(continued)

| | First nucleating agent | First nucleating agent content (wt.%) | Second nucleating agent content (Mw: 6000) (wt.%) | Crystallization temperature (T) (°C) | $T_{g,T}$ (°C) | Crystallinity degree (%) | $\Delta T_g$ |
|---|---|---|---|---|---|---|---|
| Comparative Example 9 | uracil | 3 | 0 | 130 | 62 | 56 | 4.3 |

As shown in Table 1, it was confirmed that in the case of Examples in which the first nucleating agent and the second nucleating agent were used simultaneously according to the present disclosure, the glass transition temperature can be lowered and the crystallinity degree is improved as compared to the Comparative Examples.

## Claims

1. A polylactide resin composition comprising:

    a polylactide resin; a first nucleating agent; and a second nucleating agent,
    wherein the polylactide resin composition has a glass transition temperature ($T_{g,T}$) and a crystallinity degree of 60°C or less and 55% or more, respectively, which are measured by setting a crystallization temperature to a specific temperature (T) of 100 to 130°C, and
    wherein $\Delta T_g$ in the following Equation 1 is 5 or more:

    [Equation 1]

    $$\Delta T_g = \left| \frac{(T_{g,T} - T_{g,90})}{T_{g,90}} \times 100 \right|$$

    in Equation 1,

    $T_{g,T}$ is the glass transition temperature (°C) measured by setting the crystallization temperature to the specific temperature (T) for the polylactide resin composition, and
    $T_{g,90}$ is the glass transition temperature (°C) measured by setting the crystallization temperature to 90°C for the polylactide resin composition.

2. The polylactide resin composition of claim 1, wherein the first nucleating agent is uracil or orotic acid.

3. The polylactide resin composition of claim 1, wherein the first nucleating agent is contained in an amount of 0.1 to 5% by weight based on the total weight of the polylactide resin composition.

4. The polylactide resin composition of claim 1, wherein the second nucleating agent is a compound containing a lactide oligomer structure.

5. The polylactide resin composition of claim 1, wherein the second nucleating agent is contained in an amount of 3 to 25% by weight based on the total weight of the polylactide resin composition.

6. The polylactide resin composition of claim 1, wherein the polylactide resin composition has a glass transition temperature ($T_{g,T}$) of 56°C or less, as measured by setting the crystallization temperature to a specific temperature (T) of 120 to 130°C.

7. The polylactide resin composition of claim 1,

wherein the polylactide resin composition has a glass transition temperature ($T_{g,T}$) of 50°C or less, as measured by setting the crystallization temperature to a specific temperature (T) of 120 to 130°C.

**8.** The polylactide resin composition of claim 7, wherein $\Delta T_g$ in Equation 1 is 6.5 or more.

**9.** The polylactide resin composition of claim 1, wherein the polylactide resin composition has a weight average molecular weight of 70,000 to 400,000.

[FIG. 1]

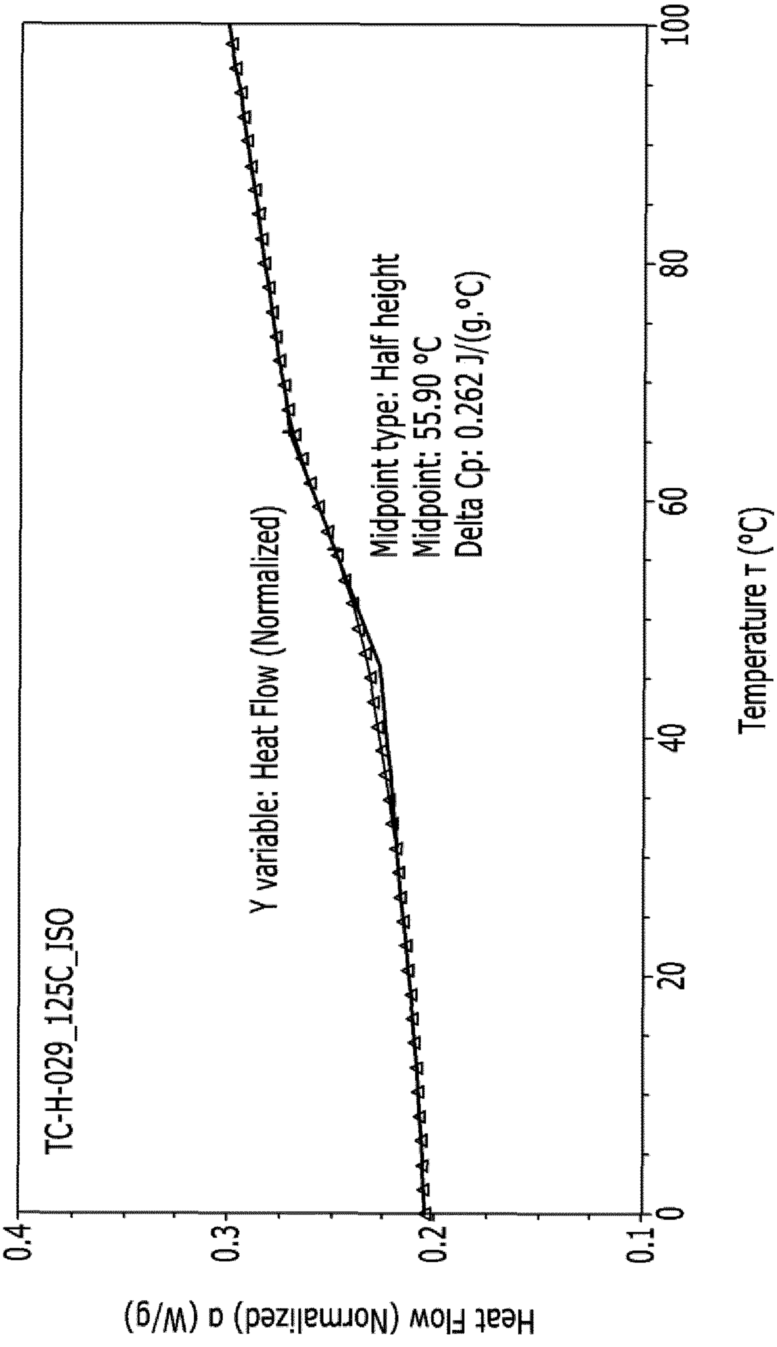
TC-H-029_125C_ISO
Y variable: Heat Flow (Normalized)
Midpoint type: Half height
Midpoint: 55.90 °C
Delta Cp: 0.262 J/(g.°C)
0
20
40
60
80
100
Temperature T (°C)
0.1
0.2
0.3
0.4
Heat Flow (Normalized) q (W/g)

## INTERNATIONAL SEARCH REPORT

International application No.
**PCT/KR2023/003453**

**A. CLASSIFICATION OF SUBJECT MATTER**

**C08K 5/00**(2006.01)i; **C08K 5/3432**(2006.01)i; **C08K 5/11**(2006.01)i; **C08L 67/04**(2006.01)i

According to International Patent Classification (IPC) or to both national classification and IPC

**B. FIELDS SEARCHED**

Minimum documentation searched (classification system followed by classification symbols)

C08K 5/00(2006.01); B29C 45/00(2006.01); B29C 45/78(2006.01); B65D 81/38(2006.01); C08G 63/08(2006.01); C08L 67/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리락타이드 수지(polylactide resin), 핵제(nucleating agent), 유라실(uracil), 오르트산(orotic acid), 결정화 온도(crystallization temperature), 유리전이온도(glass transition temperature), 결정화도(crystallinity)

**C. DOCUMENTS CONSIDERED TO BE RELEVANT**

| Category* | Citation of document, with indication, where appropriate, of the relevant passages | Relevant to claim No. |
|---|---|---|
| Y | JP 2009-249532 A (KAO CORP.) 29 October 2009 (2009-10-29)<br>See claims 1-7; and paragraph [0014]. | 1-9 |
| Y | KR 10-2014-0136020 A (HUHTAMAKI OYJ et al.) 27 November 2014 (2014-11-27)<br>See claim 1; and paragraphs [0039]-[0041]. | 1-9 |
| A | KR 10-2017-0110876 A (SK CHEMICALS CO., LTD.) 12 October 2017 (2017-10-12)<br>See entire document. | 1-9 |
| A | KR 10-2014-0147306 A (LOTTE CHEMICAL CORPORATION) 30 December 2014 (2014-12-30)<br>See entire document. | 1-9 |
| A | JP 2005-290257 A (TOYOTA MOTOR CORP. et al.) 20 October 2005 (2005-10-20)<br>See entire document. | 1-9 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 June 2023** | **20 June 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/003453**

| Patent document cited in search report | Publication date (day/month/year) | Patent family member(s) | Publication date (day/month/year) |
|---|---|---|---|
| JP 2009-249532 A | 29 October 2009 | JP 5009218 B2 | 22 August 2012 |
| KR 10-2014-0136020 A | 27 November 2014 | CN 104245811 A | 24 December 2014 |
| | | CN 104245811 B | 05 October 2016 |
| | | EP 2822992 A1 | 14 January 2015 |
| | | EP 2822992 B1 | 02 December 2015 |
| | | JP 2015-514819 A | 21 May 2015 |
| | | JP 6313229 B2 | 18 April 2018 |
| | | KR 10-2083779 B1 | 03 March 2020 |
| | | US 10626271 B2 | 21 April 2020 |
| | | US 2014-0363598 A1 | 11 December 2014 |
| | | WO 2013-131649 A1 | 12 September 2013 |
| KR 10-2017-0110876 A | 12 October 2017 | CN 108779234 A | 09 November 2018 |
| | | EP 3434710 A1 | 30 January 2019 |
| | | KR 10-2456006 B1 | 18 October 2022 |
| | | US 11118051 B2 | 14 September 2021 |
| | | US 2020-0283622 A1 | 10 September 2020 |
| | | WO 2017-164504 A1 | 28 September 2017 |
| KR 10-2014-0147306 A | 30 December 2014 | CN 104231577 A | 24 December 2014 |
| | | CN 104231577 B | 18 May 2016 |
| | | EP 2816086 A1 | 24 December 2014 |
| | | JP 2015-004050 A | 08 January 2015 |
| | | JP 5891262 B2 | 22 March 2016 |
| | | KR 10-1569247 B1 | 13 November 2015 |
| | | US 2014-0378595 A1 | 25 December 2014 |
| | | US 9085689 B2 | 21 July 2015 |
| JP 2005-290257 A | 20 October 2005 | JP 4547964 B2 | 22 September 2010 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220035551